# EUROPÄISCHE PATENTSCHRIFT

(11) **EP 3 085 611 B1**
(45) Veröffentlichungstag und Bekanntmachung des Hinweises auf die Patenterteilung: **06.05.2020**
(21) Anmeldenummer: 16164173.3
(22) Anmeldetag: 07.04.2016
(51) Int. Cl.: B62K 21/24, B62K 21/12, B62K 21/18

(54) **LENKERVORBAU**
HANDLEBAR STEM
POTENCE DE GUIDON

(30) Priorität: 21.04.2015 DE 202015002911 U
(43) Veröffentlichungstag der Anmeldung: 26.10.2016
(73) Patentinhaber: Canyon Bicycles GmbH, 56073 Koblenz (DE)
(72) Erfinder: Wagner, Lars, 64367 Mühltal (DE)
(74) Vertreter: dompatent von Kreisler Selting Werner - Partnerschaft von Patent- und Rechtsanwälten mbB

(56) Entgegenhaltungen:
- GB-A- 2 494 714
- JP-A- H11 139 379
- KR-B1- 101 471 104
- US-A1- 2004 112 168
- US-A1- 2004 183 273
- US-B1- 6 186 027

## Beschreibung

Die Erfindung betrifft einen Lenkervorbau für Fahrradlenker, insbesondere Rennradlenker.

Es ist bekannt, einen Lenkervorbau, der den Gabelschaft mit dem Fahrradlenker verbindet, derart mit dem Gabelschaft zu verbinden, dass ein Halteelement zusammen mit einem beispielsweise als Konus ausgebildeten Klemmelement in dem Gabelschaft angeordnet wird. Das Halteelement ist einstückig mit dem Vorbau ausgebildet. Durch Aufweiten des insbesondere in Längsrichtung geschlitzten Halteelements erfolgt ein klemmendes Befestigen des Halteelements im Gabelschaft.

Ferner sind Vorbauten bekannt, die ein Halteelement aufweisen, das über den Gabelschaft gesteckt wird und den Gabelschaft in montiertem Zustand umgibt. Das Halteelement ist entsprechend einer Schelle geschlitzt. Über im Wesentlichen tangential zum Gabelschaft verlaufende Schrauben wird die Schlitzbreite verringert, um eine klemmende Befestigung des Lenkervorbaus am Gabelschaft zu realisieren. Mit dem Lenkervorbau ist ferner der Lenker üblicherweise ebenfalls über eine klemmende Fixierung befestigt, wobei diese häufig als zweiteiliges Klemmelement ausgebildet ist. Mit Hilfe von zumeist vier Schrauben erfolgt ein klemmendes Befestigen des Lenkers am Vorbauelement. Das Vorbauelement ist einstückig mit dem Halteelement ausgebildet und stellt das Verbindungsstück zwischen dem mit dem Gabelschaft verbundenen Halteelement und einem den Lenker haltenden Fixierelement dar.

Die gattungsgemäße US 2004/0112168 A1 beschreibt eine Klemmvorrichtung zum Verbinden des Lenkers mit dem Gabelschaft eines Fahrrads. Die Verbindung wird mit Hilfe eines Klemmelements, das zwischen Lenker und Gabelschaft angeordnet ist, vorgenommen.

Aufgabe der Erfindung ist es, einen verbesserten Lenkervorbau zu schaffen, insbesondere den Lenkervorbau derart auszugestalten, dass auf einfache Weise eine sichere Befestigung des Lenkervorbaus am Gabelschaft realisiert ist.

Die Lösung der Aufgabe erfolgt erfindungsgemäß durch einen Lenkervorbau gemäß Anspruch 1.

Der erfindungsgemäße Lenkervorbau weist ein Halteelement zum Verbinden des Lenkervorbaus mit einem Gabelschaft auf. Das Halteelement umgibt den Gabelschaft hierbei zumindest teilweise, insbesondere vollständig. Mit dem Halteelement ist ein Vorbauelement verbunden, insbesondere einstückig ausgebildet. Das sich in montiertem Zustand in Längsrichtung des Fahrrads erstreckende Vorbauelement trägt an dem dem Halteelement gegenüberliegenden Ende den Lenker. Die Verbindung kann über ein Fixierelement erfolgen, das den Lenker insbesondere über eine Klemmung mit dem Vorbauelement verbindet. Erfindungsgemäß ist innerhalb des Halteelements ein Klemmelement angeordnet. In montiertem Zustand ist das Klemmelement zwischen dem Halteelement und dem Gabelrohr angeordnet. Auf das Klemmelement wirken mindestens ein, vorzugsweise zwei Klemmmittel, bei denen es sich insbesondere um Stift- oder Madenschrauben handelt. Mit Hilfe des mindestens einen Klemmmittels wird eine Klemmkraft auf das Halteelement ausgeübt, um den Lenkervorbau am Gabelschaft zu fixieren.

Durch das Vorsehen eines innerhalb des Halteelements des Lenkervorbaus angeordnetes Klemmelement ist es möglich und erfindungsgemäß bevorzugt, ein ungeschlitztes, insbesondere geschlossenes Halteelement vorzusehen. Dies hat insbesondere den Vorteil, dass der Vorbau eine höhere Festigkeit aufweist, bei Verbundwerkstoffen der Faserverbund belastungsoptimiert eingesetzt werden kann und eine homogene Druckverteilung erzielt werden kann.

Das Halteelement weist mindestens eine Verdickung auf, in der das mindestens eine Klemmmittel angeordnet ist. Beim Vorsehen von mehreren vorzugsweise zwei Klemmmitteln können diese in einer gemeinsamen Verdickung vorgesehen sein. Bevorzugt ist es, dass je Klemmmittel eine gesonderte Verdickung vorgesehen ist. In montiertem Zustand sind die mindestens zwei Verdickungen vorzugsweise vertikal übereinander angeordnet. Eine Verdickung und vorzugsweise ein in dieser Verdickung angeordnetes Klemmmittel ist somit in montierten Zustand im oberen Bereich des Halteelements und eine zweite Verdickung sowie das zweite Klemmmittel in einem unteren Bereich des Haltemittels angeordnet. Hierdurch kann eine gleichmäßige Klemmkraft übertragen und somit ein sicheres klemmendes Halten des Lenkervorbaus am Gabelschaft gewährleistet werden. Insbesondere ist ein Verkippen vermieden.

Besonders bevorzugt ist es, dass das mindestens eine Klemmmittel unmittelbar eine im Wesentlichen senkrecht zum Gabelschaft wirkende Klemmkraft erzeugt. Hierdurch kann eine gute Kraftübertragung realisiert werden. Im Unterschied zu einer herkömmlichen Befestigung über eine schellenartige Klemmung und im Wesentlichen tangential zum Gabelschaft verlaufende Klemmschrauben weist die erfindungsgemäße im Wesentlichen senkrechte Anordnung des Klemmmittels den Vorteil auf, dass auf das Klemmmittel, bei dem es sich insbesondere um eine Stift- bzw. Madenschraube handelt, ein geringeres Drehmoment zur Erzeugung der erforderlichen Haltekraft aufgebracht werden muss. Das ist insbesondere vorteilhaft beim Vorsehen von zwei in einem Abstand insbesondere vertikal übereinander angeordneten Klemmmitteln die beide eine im Wesentlichen senkrecht zum Gabelschaft wirkende Klemmkraft erzeugen.

Das Klemmelement weist mindestens einen Ansatz auf, der in montiertem Zustand in eine Ausnehmung des Halteelements ragt. Hierdurch kann die Lage des Klemmelements relativ zum Halteelement definiert werden. Vorzugsweise ist die Ausnehmung zwischen zwei benachbarten Verdickungen angeordnet.

Des Weiteren ist es bevorzugt, dass das mindestens eine Klemmmittel auf einer Rückseite des Halteelements, d.h. auf einer Seite des Halteelements angeordnet ist, die in montiertem Zustand entgegen der Fahrtrichtung bzw. zum Fahrer weist. Dies bewirkt insbesondere auch eine Verbesserung der Aerodynamik.

In der mindestens einen Verdickung ist in einer besonders bevorzugten Ausführungsform der Erfindung ein Gewinde vorgesehen, in das das als Schraube, insbesondere Stift- oder Madenschraube ausgebildete Klemmmittel eingeschraubt wird.

Vorzugsweise ist das Klemmelement im Querschnitt im Wesentlichen sichelförmig ausgebildet, so dass das Klemmelement im montierten Zustand mit der Schaft-Anlagefläche insbesondere flächig an der Außenseite des Gabelschafts und mit der gegenüberliegenden Seite flächig an der vorzugsweise mehrere Verdickungen aufweisenden Innenseite des Halteelements anliegt.

In einer weiteren bevorzugten Ausführungsform der Erfindung weist das Klemmelement eine Schaft-Anlagefläche auf. Diese liegt in montiertem Zustand an eine Außenseite des Gabelschafts an, so dass die von dem mindestens einen Klemmmittel aufgebrachte Klemmkraft über das Klemmelement auf den Gabelschaft übertragen wird. Die Schaft-Anlagefläche ist hierbei vorzugsweise konkav ausgebildet, wobei der Radius vorzugsweise im Wesentlichen mit dem Radius des Gabelschaftes übereinstimmt.

Das mit dem Vorbauelement verbundene, insbesondere einstückig ausgebildete Halteelement weist vorzugsweise eine Schaftöffnung auf. In diese wird in montiertem Zustand der Gabelschaft eingeführt, wobei der Gabelschaft von der Schaftöffnung vollständig umgeben ist. Das Halteelement ist somit in bevorzugter Ausführungsform ungeschlitzt. Innerhalb der Schaftöffnung ist das Klemmelement angeordnet.

In bevorzugter Ausführungsform weist das insbesondere im Querschnitt sichelförmig ausgebildete Klemmelement zwei Ausnehmungen auf, in die die beiden Verdickungen des Halteelements ragen. Ferner weist das Klemmelement vorzugsweise mehrere Ansätze auf, wobei zumindest einer vorzugsweise zwei Ansätze zwischen den Verdickungen angeordnet sind und jeweils ein weiterer Ansatz oberhalb des oberen Verdickungselements und ein weiterer Ansatz unterhalb des untern Verdickungselements angeordnet ist. Insbesondere ist das Klemmelement symmetrisch ausgebildet, so dass es möglich ist, das Klemmelement auf einer horizontalen Achse um 180° zu drehen. Der in einer bevorzugten Ausführungsform vorgesehene obere und untere Ansatz können somit in der Lage vertauscht werden. Hierdurch ist die Montage vereinfacht.

Der erfindungsgemäße Lenkervorbau weist insbesondere in den vorstehend beschriebenen besonders bevorzugten Ausführungsformen den wesentlichen Vorteil auf, dass neben einer vereinfachten Klemmung auch eine Gewichtsersparnis gegenüber herkömmlichen Lenkervorbauten erzielt werden kann.

Insbesondere zur weiteren Gewichtsverringerung ist bei einer besonders bevorzugten Weiterbildung ein Fahrradlenker einstückig mit dem Vorbauelement ausgebildet, wobei es sich insbesondere um einen Rennradlenker handelt.

Vorzugsweise ist der Vorbau bzw. das Halteelement des Vorbaus aus einem Faserverbundwerkstoff, insbesondere CFK hergestellt. Ebenso ist der Gabelschaft vorzugsweise zusammen mit den Gabelbeinen aus einem Faserverbundwerkstoff, insbesondere CFK hergestellt. Das Klemmelement ist vorzugsweise aus Metall, insbesondere Aluminium hergestellt.

Nachstehend wird die Erfindung anhand einer bevorzugten Ausführungsform unter Bezugnahme auf die anliegenden Zeichnungen näher erläutert.

Es zeigen:
- Fig. 1: eine schematische perspektivische Ansicht eines auf einem Gabelschaft montierten Lenkervorbaus mit einstückig mit diesem verbundenen Radlenker,
- Fig. 2 und 3: schematische perspektivische Explosionszeichnungen der Einzelteile und
- Fig. 4: eine schematische Schnittansicht des montierten Lenkervorbaus in Längsrichtung des Gabelschafts.

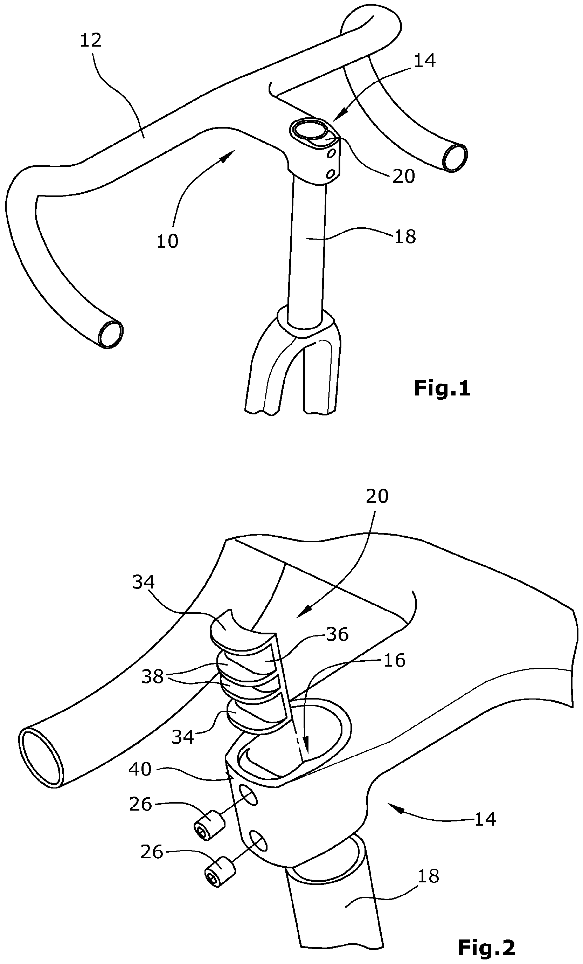

Ein Lenkervorbau weist im dargestellten Ausführungsbeispiel ein Vorbauelement 10 auf. Dieses ist im dargestellten Ausführungsbeispiel einstückig mit einem Rennradlenker 12 verbunden bzw. ausgebildet. Alternativ kann die Verbindung zwischen dem Vorbauelement 10 und einem Lenker auch über herkömmliche bekannte Klemmelemente erfolgen. Ferner ist das Vorbauelement 10 an dem dem Lenker gegenüberliegenden Ende mit einem Halteelement 14 verbunden, wobei im dargestellten Ausführungsbeispiel das Halteelement 14 und das Vorbauelement 10 einstückig ausgebildet sind. Das Halteelement 14 weist eine Schaftöffnung 16 (Fig. 2) auf, die in montiertem Zustand einen Gabelschaft 18 (Fig. 1) umgibt.

Innerhalb der Schaftöffnung und somit innerhalb des Halteelements ist ein Klemmelement 20 vorgesehen.

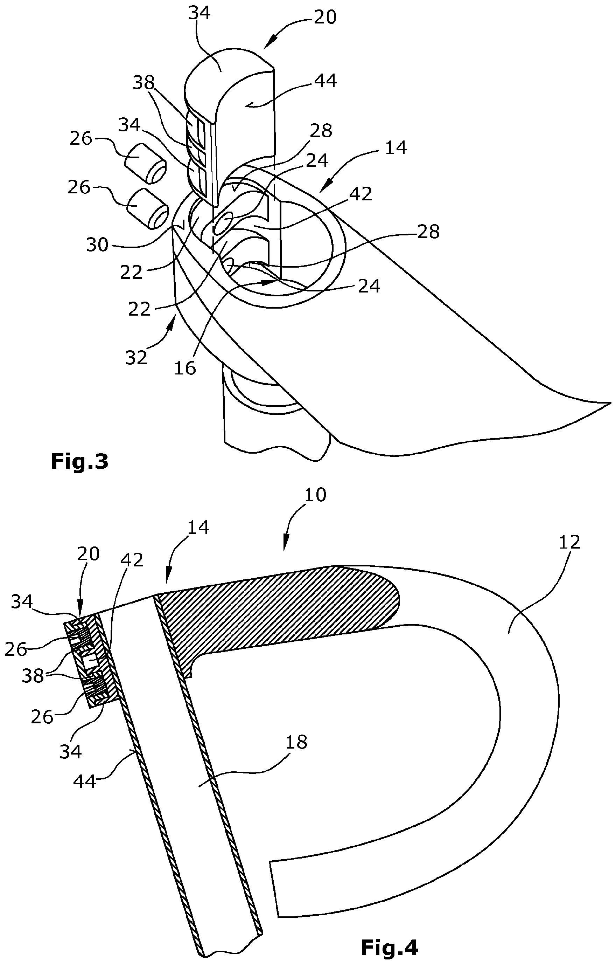

Das Halteelement 14 weist im dargestellten Ausführungsbeispiel zwei Verdickungen 22 (Fig. 3) auf. Die beiden Verdickungen 22 ragen in die Schaftöffnung 16. Ferner sind die beiden Verdickungen 22 im montierten Zustand entgegen der Fahrtrichtung bzw. auf der dem Fahrradfahrer zuweisenden Seite des Lenkervorbaus angeordnet. In den beiden Verdickungen 22 ist jeweils eine mit einem Innengewinde versehene Bohrung 24 vorgesehen. In die Bohrungen 24 werden zur Montage die Klemmmittel eingeschraubt, bei denen es sich insbesondere um Stift- bzw. Madenschrauben handelt.

Außenseiten 28 der Verdickungen 22 sind jeweils gegenüber einer Oberseite 30 bzw. einer Unterseite 32 des Halteelements zurückversetzt. Dies dient zur Aufnahme von einem oberen bzw. einem unteren Ansatz 34 des Klemmelements 20.

Das Klemmelement 20 weist einen vorzugsweise sichelförmigen Grundkörper 36 (Fig. 2) auf. In dem dargestellten Ausführungsbeispiel sind mit dem Grundkörper vier ebenfalls sichelförmige Ansätze 34, 38 verbunden bzw. einstückig mit diesem ausgebildet. Die Ansätze 34, 38 weisen in montiertem Zustand in Richtung eines hinteren entgegen der Fahrtrichtung weisenden Endes 40 des Halteelements 14. Die beiden inneren Ansätze 38, die auch als ein einziger breiterer Ansatz ausgebildet sein können sind in montiertem Zustand zwischen den beiden Verdickungen 22 angeordnet und dienen insbesondere zur exakten Definition des Klemmelements 20 in der Schaftöffnung 16 des Halteelements 14. Hierbei ragen die beiden Ansätze 38 in eine zwischen den beiden Verdickungen 22 ausgebildete Ausnehmung 42. Der obere oder der untere Ansatz 34 liegen an den Außenflächen 28 der Verdickungen 22 an (Fig. 3).

Das Klemmelement 20 weist vorzugsweise eine konvex ausgebildete Schaft-Anlagefläche 44 (Fig. 3) auf. Der Radius der Schaft-Anlagefläche 44 entspricht im Wesentlichen dem Außenradius des Gabelschafts 18. Die Schaft-Anlagefläche 44 liegt somit in montiertem Zustand (Figur 3) an einer Außenseite 46 des Gabelschafts 18 an.

Zur Montage wird das Klemmelement 20 in die Schaftöffnung 16 eingeführt und in Fig. 2 nach links in Richtung des Endes 40 des Lenkervorbaus bewegt, so dass die Ansätze 38 in der Ausnehmung 42 angeordnet sind. Anschließend wird der gesamte Lenkervorbau auf den Gabelschaft 18 aufgesteckt. Die beiden Stiftschrauben 26 werden sodann in die Gewindebohrungen 24 eingeschraubt, so dass über die Schrauben 26 Kraft auf das Klemmelement 20 aufgebracht und somit eine klemmende Fixierung an einer Außenseite 44 des Gabelschafts 18 realisiert ist. Die Montage ist somit äußerst einfach und gewährleistet eine zuverlässige Fixierung.

## Patentansprüche

1. Lenkervorbau mit
einem Halteelement (14) zum Verbinden mit einem Gabelschaft (18), wobei das Halteelement (14) den Gabelschaft (18) zumindest teilweise umgibt und
einem mit dem Halteelement (14) verbundenen Vorbauelement (10),
wobei innerhalb des Halteelements (14) ein Klemmelement (20) angeordnet ist, auf das durch mindestens ein zumindest teilweise im Halteelement (14) angeordnetes Klemmmittel (26) eine Klemmkraft zum Fixieren des Lenkervorbaus am Gabelschaft (18) wirkt,
wobei das Halteelement (14) mindestens eine Verdickung (22) aufweist, in der das mindestens eine Klemmmittel (26) angeordnet ist,
wobei das Halteelement (14) insgesamt mindestens zwei Verdickungen (22) aufweist, die in montiertem Zustand vorzugsweise vertikal übereinander angeordnet sind und wobei vorzugsweise in jeder Verdickung (22) mindestens ein Klemmmittel (26) angeordnet ist,
**dadurch gekennzeichnet, dass**
das Klemmelement (20) mindestens einen Ansatz (34, 38) aufweist, der in montiertem Zustand in eine Ausnehmung (42) des Halteelements (14) ragt, um die Lage des Klemmelements (20) relativ zum Halteelement (14) zu definieren, wobei die Ausnehmung (42) vorzugsweise zwischen zwei benachbarten Verdickungen (22) angeordnet ist.

2. Lenkervorbau nachAnspruch 1, **dadurch gekennzeichnet, dass** das mindestens eine Klemmmittel (26) unmittelbar eine im Wesentlichen senkrecht zum Gabelschaft (18) wirkende Klemmkraft erzeugt.

3. Lenkervorbau nach Anspruch 1 oder 2, **dadurch gekennzeichnet, dass** eine Schaft-Anlagefläche (44) des Klemmelements (20) konkav ausgebildet ist, insbesondere einen dem Radius des Gabelschafts (18) entsprechenden Radius aufweist, wobei vorzugsweise die Schaft-Anlagefläche (44) in montiertem Zustand am Gabelschaft (18) anliegen.

4. Lenkervorbau nach einem der Ansprüche 1 bis 3, **dadurch gekennzeichnet, dass** das Klemmelement (20) einen im Wesentlichen sichelförmigen Querschnitt aufweist.

5. Lenkervorbau nach einem der Ansprüche 1 bis 4, **dadurch gekennzeichnet, dass** in einer Rückseite des Halteelements (14) das mindestens eine Klemmmittel (26) angeordnet ist.

6. Lenkervorbau nach einem der Ansprüche 1 bis 5, **dadurch gekennzeichnet, dass** das Halteelement (14) eine Schaftöffnung (16) aufweist, die in montiertem Zustand den Gabelschaft (18) vollständig umgibt.

7. Lenkervorbau nach einem der Ansprüche 1 bis 6, **dadurch gekennzeichnet, dass** das mindestens eine Klemmmittel (26) als Stift- bzw. Madenschraube ausgebildet ist.

8. Lenkervorbau nach einem der Ansprüche 1 bis 7, **dadurch gekennzeichnet, dass** das Vorbauelement (10) mit einem Lenker (12), insbesondere einem Rennradlenker einstückig ausgebildet ist.

## Claims

1. A handlebar stem comprising
a holding element (14) for connection to a steer tube (18), the holding element (14) enclosing the steer tube (18) at least in part, and
a stem element (10) connected to the holding element (14),
wherein a clamping element (20) is arranged inside the holding element (14), a clamping force for the fixation of the handlebar stem to the steer tube (18) acting on said clamping element via at least one clamping means (26) which is at least partly arranged in the holding element (14),
wherein the holding element (14) has at least one thickening (22) in which the at least one clamping means (26) is arranged,
wherein the holding element (14) has at least two thickenings (22) in total which, in the mounted state, are preferably arranged vertically above each other, and wherein preferably at least one clamping means (26) is arranged in each thickening (22),
**characterized in that**
the clamping element (20) has at least one protrusion (34, 38) which, in the mounted state, protrudes into a recess (42) of the holding element (14) for defining the position of the clamping element (20) relative to the holding element (14), the recess (42) preferably being arranged between two adjacent thickenings (22).

2. The handlebar stem of claim 1, **characterized in that** the at least one clamping means (26) directly generates a clamping force substantially acting orthogonally relative to the steer tube (18).

3. The handlebar stem of claim 1 or 2, **characterized in that** a tube contact surface (44) of the clamping element (20) is shaped concavely, in particular having a radius corresponding to the radius of the steer tube (18), wherein, in the mounted state, the tube contact surface (44) preferably is in contact with the steer tube (18).

4. The handlebar stem of one of claims 1 to 3, **characterized in that** the clamping element (20) has a substantially crescent-shaped cross section.

5. The handlebar stem of one of claims 1 to 4, **characterized in that** the at least one clamping means (26) is arranged in a rear side of the holding element (14).

6. The handlebar stem of one of claims 1 to 5, **characterized in that** the holding element (14) has a tube opening (16) which, in the mounted state, completely surrounds the steer tube (18).

7. The handlebar stem of one of claims 1 to 6, **characterized in that** the at least one clamping means (26) is a stud screw or a grub screw.

8. The handlebar stem of one of claims 1 to 7, **characterized in that** the stem element (10) is formed integrally with a handlebar (12), in particular with a racing bicycle handlebar.

## Revendications

1. Potence de guidon dotée
d'un élément de maintien (14) pour le raccordement à une tige de fourche (18), dans laquelle l'élément de maintien (14) entoure au moins en partie la tige de fourche (18) et
d'un élément de potence (10) raccordé à l'élément de maintien (14),
dans laquelle un élément de serrage (20) est agencé à l'intérieur de l'élément de maintien (14), sur lequel opère une force de serrage, par au moins un moyen de serrage (26) agencé au moins partiellement dans l'élément de maintien (14), afin de fixer la potence de guidon sur la tige de fourche (18),
dans laquelle l'élément de maintien (14) comporte au moins un renflement (22), l'au moins un moyen de serrage (26) étant agencé dans celui-ci,
dans laquelle l'élément de maintien (14) comporte au total au moins deux renflements (22), lesquels sont agencés de préférence verticalement l'un au-dessus de l'autre dans l'état monté et dans laquelle au moins un moyen de serrage (26) est de préférence agencé dans chaque renflement (22),
**caractérisée en ce que**
l'élément de serrage (20) comporte au moins un appendice (34, 38), lequel est en saillie dans un évidement (42) de l'élément de maintien (14) dans l'état monté, afin de définir la position de l'élément de serrage (20) par rapport à l'élément de maintien (14), dans laquelle l'évidement (42) est de préférence agencé entre deux renflements (22) contigus.

2. Potence de guidon selon la revendication 1, **caractérisée en ce que** l'au moins un moyen de serrage (26) produit directement une force de serrage s'exerçant essentiellement de façon perpendiculaire par rapport à la tige de fourche (18).

3. Potence de guidon selon la revendication 1 ou 2, **caractérisée en ce qu'**une surface d'appui sur tige (44) de l'élément de serrage (20) est réalisée de manière concave, possède en particulier un rayon correspondant au rayon de la tige de fourche (18), dans laquelle les surfaces d'appui sur tige (44) appuient de préférence sur la tige de fourche (18) dans l'état monté.

4. Potence de guidon selon l'une des revendications 1 à 3, **caractérisée en ce que** l'élément de serrage (20) possède une section essentiellement en forme de croissant.

5. Potence de guidon selon l'une des revendications 1 à 4, caractérisé en ce l'au moins un moyen de serrage (26) est agencé dans une face arrière de l'élément de maintien (14) .

6. Potence de guidon selon l'une des revendications 1 à 5, **caractérisée en ce que** l'élément de maintien (14) comporte une ouverture de tige (16), laquelle entoure entièrement la tige de fourche (18) dans l'état monté.

7. Potence de guidon selon l'une des revendications 1 à 6, **caractérisée en ce que** l'au moins un moyen de serrage (26) est réalisé comme broche ou vis sans tête.

8. Potence de guidon selon l'une des revendications 1 à 7, **caractérisée en ce que** l'élément de potence (10) est réalisé d'une pièce avec un guidon (12), de préférence un guidon de vélo de course.
